# EUROPEAN PATENT APPLICATION

(11) **EP 4 714 620 A1**
(43) Date of publication of application: **25.03.2026**
(21) Application number: 25193795.9
(22) Date of filing: 04.08.2025
(51) Int. Cl.: B26D 7/08, B26D 7/18, B26F 1/44

(54) **APPARATUS FOR NOTCHING ELECTRODE PLATES FOR SECONDARY BATTERIES AND METHOD OF NOTCHING ELECTRODE PLATES USING APPARATUS**

(30) Priority: 24.09.2024 KR 20240129181
(71) Applicant: SAMSUNG SDI CO., LTD., Yongin-si, Gyeonggi-do 17084 (KR)
(72) Inventor: JANG, Youngjin, 17084 Yongin-Si, Gyeonggi-do (KR); PARK, Hyunjun, 17084 Yongin-Si, Gyeonggi-do (KR); CHOI, Junghun, 17084 Yongin-Si, Gyeonggi-do (KR)
(74) Representative: Michalski Hüttermann & Partner Patentanwälte mbB

(57) **Abstract**

An apparatus for notching electrode plates for secondary batteries and a method of notching electrode plates using the apparatus. The apparatus includes a first base, a punch plate coupled to a surface of the first base, a pair of punches spaced apart from each other, coupled to the punch plate, and configured to cut an electrode plate, a stripper positioned between the punches and coupled to the punch plate, a second base, a die coupled to the second base and configured to have the electrode plate placed on a first surface of the die. Each of separation distances between the punches and the stripper ranges from 0.25 mm to 1 mm.

## Description

### BACKGROUND

### 1. Field

The present disclosure relates to an apparatus for notching electrode plates for secondary batteries and a method of notching electrode plates using the apparatus.

### 2. Description of the Related Art

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

A positive electrode plate and a negative electrode plate of a lithium ion battery may be manufactured by applying a positive electrode (or cathode) active material to a positive electrode collector in the form of a metal thin film (e.g., aluminum foil) and applying a negative electrode (or anode) active material to a negative electrode collector in the form of a metal thin film (e.g., copper foil). Specifically, the electrode plate manufacturing process may include mixing, coating, and pressing processes to produce a rolled metal thin film substrate to which the active material is applied. In addition, the electrode plate manufacturing process may include slitting and notching processes to cut the rolled metal thin film substrate according to battery specifications.

However, separation distances between punches and a stripper can be excessively small when blanking high-strength electrode plates are involved in the notching process, resulting in the active material powder being stuck or accumulated between the punches and the stripper, thereby reducing the operability of the notching apparatus. In addition, the active material powder stuck between the punches and the stripper may wear a die during a dying operation using the notching apparatus, thereby reducing the life of the apparatus.

The information disclosed in this Background section is for enhancement of understanding of the background of the present disclosure. The section may contain information that does not constitute related (or prior) art.

### SUMMARY

Embodiments of the present disclosure provide an apparatus for notching electrode plates for secondary batteries and a method of notching electrode plates using the apparatus.

According to embodiments of the present disclosure, an apparatus for notching electrode plates for secondary batteries includes a first base with a punch plate coupled to a first surface thereof, a pair of punches spaced apart from each other, coupled to the punch plate, and configured to cut an electrode plate, a stripper disposed between the punches and coupled to the punch plate; a die with the electrode plate placed on a first surface thereof, and a second base to which the die is fixedly coupled, wherein each of separation distances between the punches and the stripper ranges from 0.25 mm to 1 mm.

Embodiments of the present disclosure provide an apparatus including: a first base; a punch plate coupled to a surface of the first base; a first punch and a second punch spaced apart from each other, coupled to the punch plate, and configured to cut an electrode plate; a stripper positioned between the first punch and the second punch and coupled to the punch plate; a second base; and a die coupled to the second base and configured to have the electrode plate placed on a surface of the die, wherein a first distance between the first punch and the stripper ranges from 0.25 mm to 1 mm and a second distance between the second punch and the stripper ranges from 0.25 mm to 1 mm.

In a preferred embodiment, the first distance between the first punch and the stripper is preferably in a range of 0.25 mm to 1 mm, more preferably from 0.3 mm to 0.8 mm, and even more preferably from 0.35 mm to 0.7 mm. Similarly, the second distance between the second punch and the stripper is preferably in a range of 0.25 mm to 1 mm, more preferably from 0.3 mm to 0.8 mm, and even more preferably from 0.35 mm to 0.7 mm.

According to embodiments of the present disclosure, each of the separation distances between the punches and the stripper may be 0.5 mm.

In an embodiment, the first distance is 0.5 mm and the second distance is 0.5 mm.

According to embodiments of the present disclosure, a curved portion may be provided on at least one of edges of the stripper adjacent to the punches.

In an embodiment, a curved portion is provided on at least one edge of the stripper adjacent to the first punch or the second punch.

According to embodiments of the present disclosure, the length of the curved portion in a first direction may be different from the length of the curved portion in a second direction perpendicular to the first direction.

In an embodiment, a third distance of the curved portion in a first direction is different from a fourth distance of the curved portion in a second direction perpendicular to the first direction.

According to embodiments of the present disclosure, the length of the curved portion in the first direction perpendicular to a longitudinal direction of the stripper may be greater than the length of the curved portion in the second direction.

In an embodiment, the first direction is perpendicular to a longitudinal direction of the stripper, and wherein a third distance is greater than the fourth distance.

According to embodiments of the present disclosure, the length of the curved portion in the first direction may be 0.7 mm or more.

In an embodiment, the third distance is equal to or greater than 0.7 mm.

According to embodiments of the present disclosure, the length of the curved portion in the first direction may be 0.75 mm, and the length of the curved portion in the second direction may be 0.25 mm.

In an embodiment, the third distance is 0.75 mm, and wherein the fourth distance is 0.25 mm.

According to embodiments of the present disclosure, the striper may be spaced apart from the die to face the die, and move toward the electrode plate to press and fix a top surface of the electrode plate.

In an embodiment, wherein the stripper is spaced apart from the die and faces the die, and is configured to move toward the electrode plate to press a top surface of the electrode plate.

According to embodiments of the present disclosure, the thickness of the electrode plate may range from 0.18 mm to 0.22 mm.

In an embodiment, the electrode plate has a thickness ranging from 0.18 mm to 0.22 mm.

According to embodiments of the present disclosure, the punches may move up and down together with the first base to move downward along a separation space between the punches and the stripper to cut opposite ends of the electrode plate placed on the die.

In an embodiment, the first punch and the second punch are configured to move upward and downward along with the first base.

According to embodiments of the present disclosure, a method of notching electrode plates for secondary batteries includes placing an electrode plate on a die, pressing and fixing the electrode plate placed on the die by downwardly moving the stripper, and cutting the electrode plate by downwardly moving punches spaced apart from the stripper, wherein each of separation distances between the punches and the stripper ranges from 0.25 mm to 1 mm.

Embodiments of the present disclosure provide a method for notching electrode plates for secondary batteries, including: placing an electrode plate on a die; pressing the electrode plate via a downward motion of a stripper; and cutting the electrode plate via a downward motion of a first punch and a second punch spaced apart from the stripper, wherein a first distance between the first punch and the stripper ranges from 0.25 mm to 1 mm and a second distance between the second punch and the stripper ranges from 0.25 mm to 1 mm.

According to embodiments of the present disclosure, each of the separation distances between the punches and the stripper may be 0.5 mm.

In an embodiment, the first distance is 0.5 mm and the second distance is 0.5 mm.

According to embodiments of the present disclosure, a curved portion may be provided on at least one of edges of the stripper adjacent to the punches.

In an embodiment, a curved portion is provided on at least one edge of the stripper adjacent to the first punch or the second punch.

According to embodiments of the present disclosure, the length of the curved portion in a first direction may be different from the length of the curved portion in a second direction perpendicular to the first direction.

In an embodiment, a third distance of the curved portion in a first direction is different from a fourth distance of the curved portion in a second direction perpendicular to the first direction.

According to embodiments of the present disclosure, the length of the curved portion in the first direction perpendicular to a longitudinal direction of the stripper may be greater than the length of the curved portion in the second direction.

In an embodiment, the first direction is perpendicular to a longitudinal direction of the stripper, and wherein a third distance is greater than the fourth distance.

According to embodiments of the present disclosure, the length of the curved portion in the first direction may be 0.7 mm or more.

In an embodiment, the third distance is equal to or greater than 0.7 mm.

According to embodiments of the present disclosure, the length of the curved portion in the first direction may be 0.75 mm, and the length of the curved portion in the second direction may be 0.25 mm.

In an embodiment, the third distance is 0.75 mm, and wherein the fourth distance is 0.25 mm.

According to embodiments of the present disclosure, the striper may be spaced apart from the die to face the die, and move toward the electrode plate to press and fix a top surface of the electrode plate.

In an embodiment, the stripper is spaced apart from the die and faces the die, and is configured to move toward the electrode plate to press a top surface of the electrode plate.

According to embodiments of the present disclosure, the thickness of the electrode plate may range from 0.18 mm to 0.22 mm.

In an embodiment, the electrode plate has a thickness ranging from 0.18 mm to 0.22 mm.

According to embodiments of the present disclosure, the punches may move up and down together with the first base to move downward along a separation space between the punches and the stripper to cut opposite ends of the electrode plate placed on the die.

In an embodiment, the first punch and the second punch are configured to move upward and downward along with the first base.

According to various embodiments of the present disclosure, each of the distances between the punches and the stripper may be maintained at a predetermined level, and accordingly, the active material may be prevented from being stuck between the punches and the stripper during the process of cutting the electrode plate. Accordingly, problems of poor die assembly and poor operability of the notching apparatus may be prevented.

According to various embodiments of the present disclosure, the phenomenon that the active material accumulates on the die in the distances between the punches and the stripper due to the repetition of the notching process and the notching die is subjected to seizure and wears may be prevented.

According to various embodiments of the present disclosure, the curved edge of the stripper may minimize damage, such as microcracks, in electrode plates. Accordingly, short circuits, fires, and the like in secondary batteries may be prevented.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view showing an apparatus for notching electrode plates for secondary batteries according to embodiments of the present disclosure.
FIG. 2 is a perspective view showing punches and a stripper of the apparatus for notching electrode plates for secondary batteries according to embodiments of the present disclosure.
FIG. 3 shows separation distances between the punches and the stripper of the apparatus for notching electrode plates for secondary batteries according to embodiments of the present disclosure, viewed from above.
FIG. 4 is a perspective view showing a first end of the stripper of the apparatus for notching electrode plates for secondary batteries according to embodiments of the present disclosure.
FIG. 5 is a perspective view showing a second end of the stripper of the apparatus for notching electrode plates for secondary batteries according to embodiments of the present disclosure.
FIG. 6 is a cross-sectional view showing a state of the apparatus for notching electrode plates for secondary batteries according to embodiments of the present disclosure, before cutting an electrode plate.
FIG. 7 is a cross-sectional view showing a state of the apparatus for notching electrode plates for secondary batteries according to embodiments of the present disclosure, cutting an electrode plate.
FIG. 8 shows an electrode plate being damaged on the notching apparatus according to a comparative example.
FIG. 9 shows a curved portion of the stripper of the apparatus for notching electrode plates for secondary batteries according to embodiments of the present disclosure.
FIG. 10 shows first and second ends of the stripper of the apparatus for notching electrode plates for secondary batteries according to embodiments of the present disclosure.
FIG. 11 is a flowchart showing a method of notching electrode plates for secondary batteries according to embodiments of the present disclosure.
FIG. 12 is a perspective view showing an arrangement of an electrode plate on an apparatus for notching electrode plates for secondary batteries according to embodiments of the present disclosure.
FIG. 13 shows punches of the apparatus for notching electrode plates for secondary batteries according to embodiments of the present disclosure, moving toward the electrode plate.
FIG. 14 shows a state in which the electrode plate cut in FIG. 13 is slit according to embodiments of the present disclosure.

### DETAILED DESCRIPTION OF THE EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plain views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Terms used herein are intended to describe embodiments of the present disclosure and are not intended to limit the present disclosure.

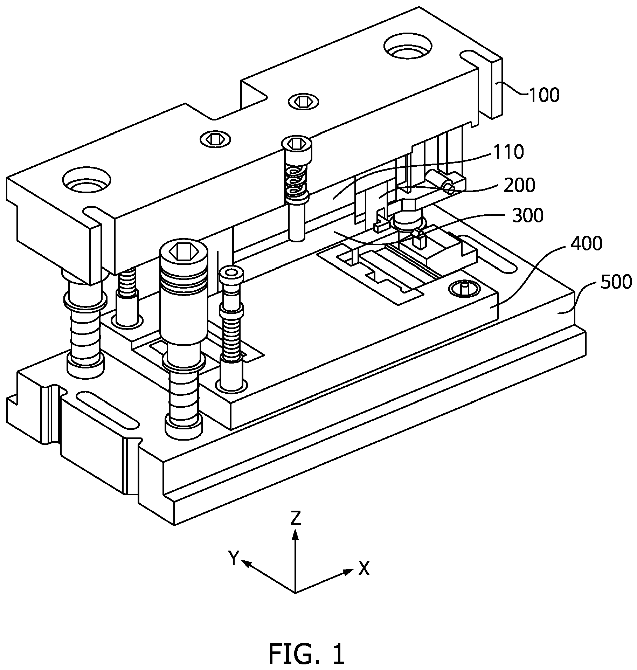

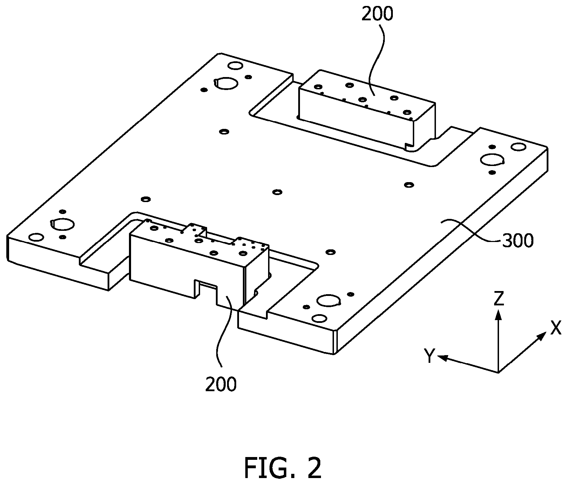

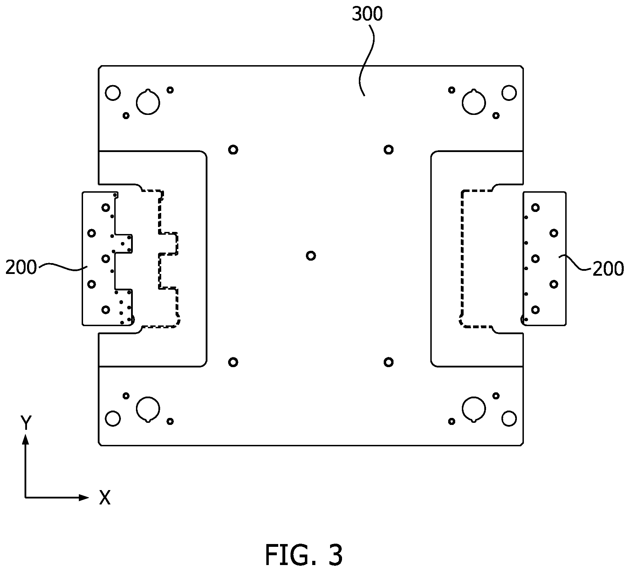

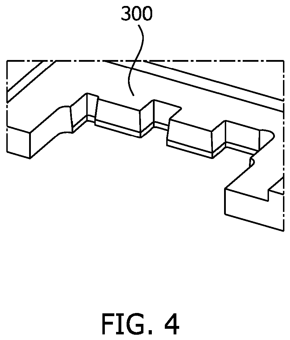

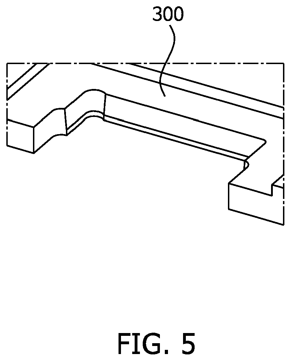

FIG. 1 is a perspective view showing an apparatus for notching electrode plates for secondary batteries according to embodiments of the present disclosure. FIG. 2 is a perspective view showing punches and a stripper of the apparatus for notching electrode plates for secondary batteries according to embodiments of the present disclosure. FIG. 3 shows separation distances between the punches and the stripper of the apparatus for notching electrode plates for secondary batteries according to embodiments of the present disclosure, viewed from above. FIG. 4 is a perspective view showing a first end of the stripper of the apparatus for notching electrode plates for secondary batteries according to embodiments of the present disclosure. FIG. 5 is a perspective view showing a second end of the stripper of the apparatus for notching electrode plates for secondary batteries according to embodiments of the present disclosure.

Referring to FIGS. 1-5, the apparatus for notching electrode plates for secondary batteries according to embodiments of the present disclosure may include: a first base 100; punches 200 coupled to the first base 100; a stripper 300 disposed between a pair of punches 200; a die 400; and a second base 500 to which the die 400 is coupled. The separation distances between the punches 200 and the stripper 300 may range from 0.25 mm to 1 mm.

The apparatus for notching electrode plates for secondary batteries may be a blanking die capable of blanking and cutting electrode plates to meet predetermined dimensions. The apparatus for notching electrode plates for secondary batteries may include an upper die having a first base 100 and a lower die having a second base 500. In an embodiment, the electrode plate may be provided between the upper die and the lower die. The upper and lower dies may be defined based on the relative positions thereof in the Z-axis direction.

The first base 100 may have a punch plate 110 coupled to a first surface thereof. In an embodiment, the punch plate 110 may be fixedly coupled to the lower portion of the first base 100. The punch plate 110 may fix the position of the punch 200 and prevent breakage. The first base 100 may fix the components of the upper die.

A pair of punches 200 may be spaced apart from each other and coupled to the punch plate 110. The punches 200 may cut the electrode plate. In an embodiment, the punches 200 may travel upward and downward together with the first base 100. The punches 200 may move downward together with the first base 100 to cut the electrode plate disposed on the die 400.

The stripper 300 may be coupled to the punch plate 110. In an embodiment, a stripper connecting pin may connect and couple the stripper 300 and the punch plate 110. In an embodiment, the stripper 300 may be moved downward coupled to the punch plate 110 by an elastic member.

The stripper 300 may be disposed between the punches 200. The stripper 300 may include punch receptacles corresponding to the shape of the punches 200 on two opposite ends in the X-axis direction. The punches 200 may be coupled to the punch plate 110, and may be received in the punch receptacles of the stripper 300. The shape of the punches 200 may correspond to the shape of the opposite ends of the electrode plate to be cut. Referring to FIG. 2, the punch receptacles on the opposite ends of the stripper 300 may have an open structure. However, this is not intended to be limiting, and the punch receptacles may have the shape of through-holes allowing the punches to be inserted through the stripper 300.

The stripper 300 may include a blanking oil supply flow path positioned within the stripper 300. The blanking oil supply flow path may supply blanking oil to the two opposite ends of the stripper 300. The sides of the punches 200 are positioned to be coupled with any of the two opposite ends of the stripper 300, such that the sides of the punches 200 may be supplied with blanking oil. In an embodiment, the stripper 300 may maintain positions of the punches 200 and guide the movement of the punches 200. The stripper 300 may also remove scrap or the like stuck to the punches 200 after the electrode plate is cut.

Each of the separation distances between the punches 200 and the stripper 300 may range from 0.25 mm to 1 mm. In an embodiment, each of the separation distances between the punches 200 and the stripper 300 may be 0.5 mm. The punches 200 and the stripper 300 may be spaced apart from each other in the X direction and the Y direction. In an embodiment, the thickness of the electrode plate may range from 0.18 mm to 0.22 mm.

According to a comparative example, the separation distance between the punch and the stripper ranges from 0.015 mm to 0.02 mm. Such a range results in the powder of an active material of the electrode plate being stuck and accumulating during blanking. In addition, the active material may stick to the punches or the die, thereby causing the notching apparatus to malfunction.

According to a comparative example, when the separation distance between the punch and the stripper is less than 0.25 mm, the active material of the electrode plate may be stuck between the punches and the stripper, or the electrode plate may be dislodged, which may cause the punch to wear out. When the separation distance between the punches 200 and the stripper 300 is greater than 1 mm, non-blanking of the electrode plate may occur.

On the other hand, according to embodiments of the present disclosure, each of the distances between the punches 200 and the stripper 300 may be maintained at a level of 0.25 mm to 1 mm so that the active material may be prevented from being stuck between the punches 200 and the stripper 300 during an electrode plate cutting process. Advantageously, the apparatus for notching electrode plates for secondary batteries may prevent poor die assembly and poor operability. Embodiments of the present disclosure prevent the active material from accumulating on the die between the punches 200 and the stripper 300 due to repeat notching and also prevent seizure and wear and tear of the notching die.

The lower die may include the die 400 and the second base 500. The die 400 may be fixedly coupled to the second base 500. In an embodiment, the die 400 may be fixedly coupled to the upper portion of the second base 500. The die 400 may have an electrode plate placed on a first surface thereof. The die 400 may include punch insertion portions on opposite ends.

The upper die and the lower die may be spaced apart and connected. In an embodiment, the upper die and the lower die may be coupled by a base guide post connecting the first base 100 and the second base 500. However, this is not intended to be limiting, and the notching apparatus according to the present disclosure may further include any component desired for the coupling structure between the upper die and the lower die for cutting the electrode plate.

The upper die may be configured to move downward or upward with respect to the lower die. In an embodiment, the lower die may be configured to move downward or upward with respect to the upper die. When the first base 100 is moving downward, the stripper 300 may contact the die 400. When the electrode plate is disposed on the die 400, the stripper 300 may contact the electrode plate to fix the electrode plate.

In an embodiment, when the first base 100 is moved downward, the punches 200 may be moved downward and inserted into the die 400. When the electrode plate is disposed on the die 400, the punches 200 may penetrate and cut the electrode plate. The cut portions of the electrode plate may be ejected through the punch insertion portions of the die 400.

The stripper 300 may be spaced apart from the die 400 on the upper portion of the die 400 and face the die 400. The stripper 300 may include punch receptacles configured to receive punches 200, and the punches 200 may be moved up or down through the punch receptacles.

The die 400 and/or punches 200 may have a shape corresponding to predetermined dimensions. In an embodiment, the punch insertion portions on the two opposite ends of the die 400 and/or the punches 200 may correspond to the cut shape of the electrode plate. Similarly, the shape of the punch receiving portions of the die 400 may correspond to the shape of the punches 200 to receive the punches 200.

The notching apparatus may include any of the components as well as any other components desired for manufacturing electrode plates for secondary batteries.

The die 400 may be formed in the shape of a flat plate with an electrode plate placed on the top surface thereof. The electrode plate to be cut may be placed on the top surface of the die with a substrate provided between the active material. The punches 200 may cut the electrode plate placed on the top surface of the die 400.

In an embodiment, the electrode plate notching apparatus may manufacture electrode plates for secondary batteries according to predetermined dimensions by moving the stripper 300 downward to fix an electrode plate and cut portions of the electrode plate. The stripper 300 may be spaced apart from the die 400, and may move toward the electrode plate to press and fix the top surface of the electrode plate. In an embodiment, the stripper 300 may move downward toward the electrode plate placed on the die 400 and fix the electrode plate. Accordingly, the electrode plate may be prevented from lifting and moving while the punches 200 are cutting the electrode plate, thereby achieving more accurate cutting.

The punches 200 may move downward in the Z-axis direction of the electrode plate to cut the electrode plate according to predetermined dimensions. In an embodiment, when the electrode plate is fixed between the stripper 300 and the die 400 in response to the downward movement of the stripper 300, the punches 200 may be moved downward further than the stripper 300. The punches 200 may move downward along the separation space between the punches 200 and the stripper 300 to cut opposite ends of the electrode plate placed on the die 400.

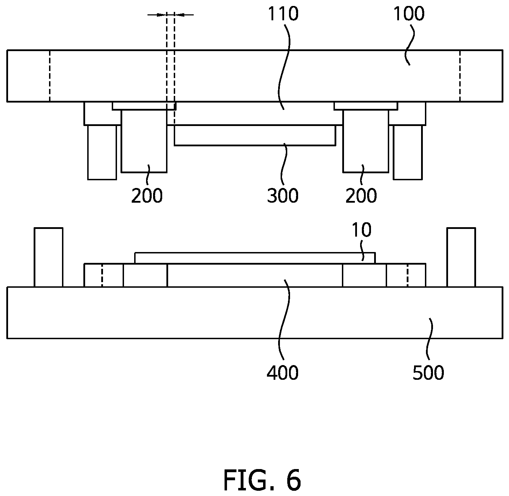

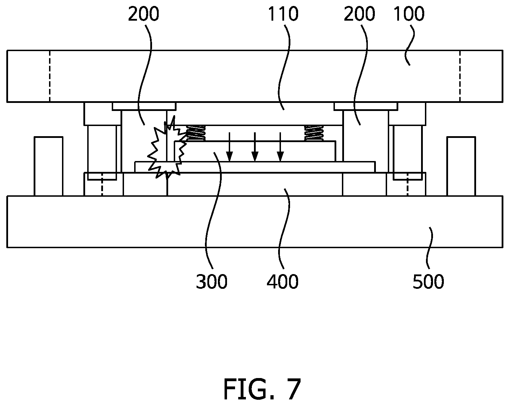

FIG. 6 is a cross-sectional view showing a state of the apparatus for notching electrode plates for secondary batteries according to embodiments of the present disclosure, before cutting an electrode plate and FIG. 7 is a cross-sectional view showing a state of the apparatus for notching electrode plates for secondary batteries according to embodiments of the present disclosure, cutting an electrode plate.

Referring to FIGS. 6 and 7, in an embodiment, the electrode plate 10 is placed on the top surface of the die 400, the electrode plate 10 may be cut using the punches 200. The electrode plate 10 may be placed on the top surface of the die 400 with a substrate provided between the active materials.

When the electrode plate 10 is placed on the die 400, the stripper 300 may be moved downward to fix the electrode plate 10. The stripper 300 may be moved toward the electrode plate 10 to press and fix the top surface of the electrode plate 10. When the stripper 300 is moved downward and the electrode plate 10 is fixed between the stripper 300 and the die 400, the punches 200 may move downward further than the stripper 300 to cut the electrode plate 10. The punches 200 may have a shape corresponding to predetermined dimensions of the electrode plate. In an embodiment, the cross-section of a side of the punches 200 may correspond to the cut shape of the electrode plate. The notching apparatus may manufacture an electrode plate for secondary batteries having predetermined dimensions by cutting portions of the electrode plate using the punches 200.

When the electrode plate 10 is a negative electrode plate, the negative electrode substrate may include copper foil or nickel foil, and the negative electrode active material may include graphite.

The negative electrode active material may include a material capable of reversibly intercalating/deintercalating lithium ions, a lithium metal, a lithium metal alloy, a material capable of doping/dedoping lithium, or a transition metal oxide.

The material capable of reversibly intercalating/deintercalating lithium ions may include a carbon-based negative electrode active material including crystalline carbon, amorphous carbon or a combination thereof. The crystalline carbon may include graphite including non-shaped, sheet-shaped, flake-shaped, sphere-shaped, or fiber-shaped natural graphite or artificial graphite. The amorphous carbon may include a soft carbon, a hard carbon, a mesophase pitch carbonization product, calcined coke, and the like.

The lithium metal alloy includes an alloy of lithium and a metal including Na, K, Rb, Cs, Fr, Be, Mg, Ca, Sr, Si, Sb, Pb, In, Zn, Ba, Ra, Ge, Al, and Sn.

The material capable of doping/dedoping lithium may include a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO₂, a Sn-based alloy, or a combination thereof.

The silicon-carbon composite may include a composite of silicon and amorphous carbon. According to an embodiment, the silicon-carbon composite may exist in a form of silicon particles and amorphous carbon coated on the surface of the silicon particles. In an embodiment, the silicon-carbon composite may include a secondary particle (core) in which primary silicon particles are assembled, and an amorphous carbon coating layer (shell) on the surface of the secondary particle. The amorphous carbon may also exist between the primary silicon particles, and, in an embodiment, the primary silicon particles may be coated with the amorphous carbon. The secondary particle may exist dispersed in an amorphous carbon matrix.

The silicon-carbon composite may further include crystalline carbon. In an embodiment, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

When the electrode plate 10 is a positive electrode plate, the positive electrode substrate may include aluminum foil, and the positive electrode active material may include a transition metal oxide.

The positive electrode active material may include a compound (e.g., lithiated intercalation compound) capable of intercalating and deintercalating lithium. In an embodiment, a composite oxide of lithium and a metal selected from cobalt, manganese, nickel, and combinations thereof may be used.

The composite oxide may include a lithium transition metal composite oxide. Non-limiting examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

In an embodiment, the composite oxide may include the following compounds represented by any one of the following Chemical Formulas. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8) where A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may include a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol%, and less than or equal to 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, the separation distances between the punches 200 and the stripper 300 may range from 0.25 mm to 1 mm. The thickness of the electrode plate 10 may be 0.2 mm. Such dimensions prevent, the active material of the electrode plate from being stuck between the punches 200 and the stripper 300 or the electrode plate from being dislodged.

Accordingly, seizure of foreign matter to the notching apparatus including the punches 200 after repeat cutting may be prevented. In addition, low voltage defects, short circuit defects, and the like may be prevented. Wear and tear of the notching apparatus may also be prevented, thereby improving the lifespan thereof. In an embodiment, while the life of the notching apparatus according to the comparative example is 1.3 million shots, the life of the notching apparatus according to embodiments of the present disclosure may be equal to or greater than 2 million shots, which is improved by equal to or greater than 700,000 shots.

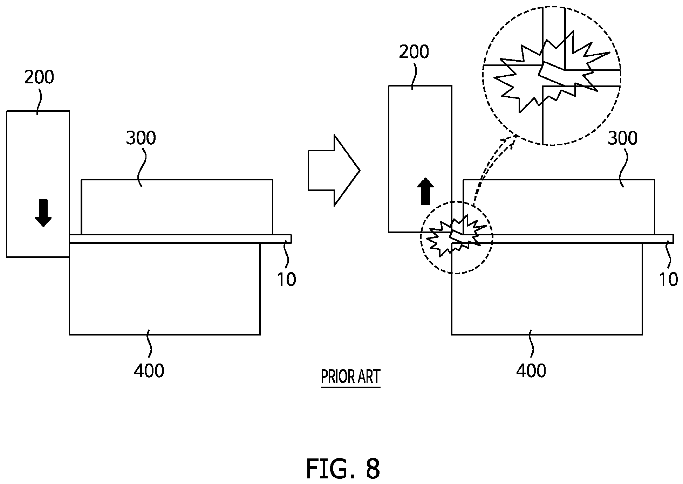

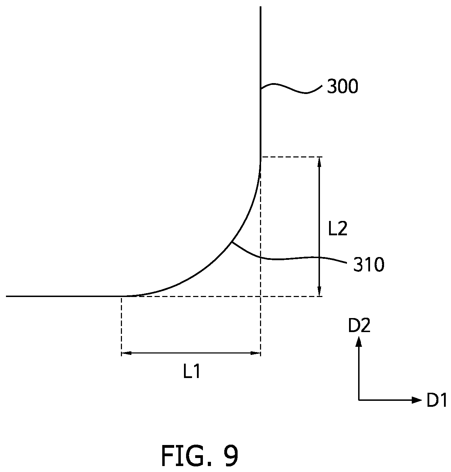

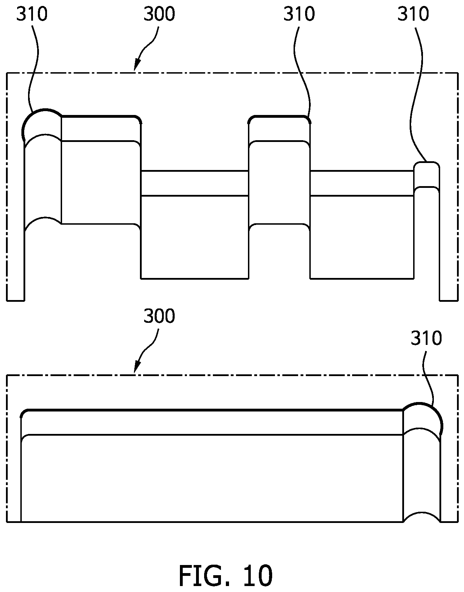

FIG. 8 shows an electrode plate being damaged on the notching apparatus according to a comparative example. FIG. 9 shows a curved portion of the stripper of the apparatus for notching electrode plates for secondary batteries according to embodiments of the present disclosure. FIG. 10 shows first and second ends of the stripper of the apparatus for notching electrode plates for secondary batteries according to embodiments of the present disclosure.

In the notching apparatus according to the comparative example shown in FIG. 8, the electrode plate 10 is placed on the top surface of the die 400, and the punches 200 are moved downward and cut the electrode plate 10. When moving the punches 200 upward after cutting the electrode plate 10, friction may be generated between the side portions of the punch 200 and the cut portions of the electrode plate 10. A portion of the top surface of the electrode plate 10 not supported by the stripper 300 may bend. For example, when the edge of the stripper 300 is provided in a straight line, damage (e.g., microcracks) to the electrode plate 10 may occur during the process of cutting the electrode plate 10.

On the other hand, as shown in FIG. 9 and FIG. 10, embodiments of the present disclosure provide a curved portion 310 on an edge of the stripper 300 adjacent to the punch 200 (or each of edges of the stripper 300 adjacent to the punches 200). The curved portion 310 may be an arc of a circle, and the center of the circle may be selected as desired. The length L1 of the curved portion 310 in a first direction D1 may be different from the length L2 of the curved portion 310 in a second direction D2 perpendicular to the first direction D1. As used herein, the length L1 may refer to the length of a straight line along which the curved portion 310 is projected in the first direction D1, and the length L2 may refer to the length of a straight line along which the curved portion 310 is projected in the second direction D1.

In an embodiment, the length of the curved portion 310 in the first direction D1 perpendicular to the longitudinal direction of the stripper 300 may be greater than the length of the curved portion 310 in the second direction D2 perpendicular to the first direction D1. As used herein, the longitudinal direction of the stripper 300 may refer to the direction of the X-axis in FIG. 2. The length of the curved portion 310 along the first direction D1 perpendicular to the longitudinal direction of the stripper 300 may be set to be greater than the length of the curved portion 310 along the second direction D2, so that a softer curved portion 310 may be formed at the edge of the stripper 300. Accordingly, damage (e.g., microcracks) to the electrode plate 10 may be prevented in the process of the punches 200 cutting the electrode plate 10.

In an embodiment, the curved portion 310 may have a variable radius r. In an embodiment, the curved portion 310 may have a decreasing radius r in the direction D1 (i.e., the right hand side direction in FIG. 9).

The length L1 of the curved portion 310 in the first direction D1 may be equal to or greater than 0.7 mm. In an embodiment, the length L1 of the curved portion 310 in the first direction D1 may be 0.75 mm, and the length L2 of the curved portion 310 in the second direction D2 may be 0.25 mm. When the length L1 of the curved portion 310 in the first direction D1 is less than 0.7 mm, microcracks may be generated during the process of cutting the electrode plate 10.

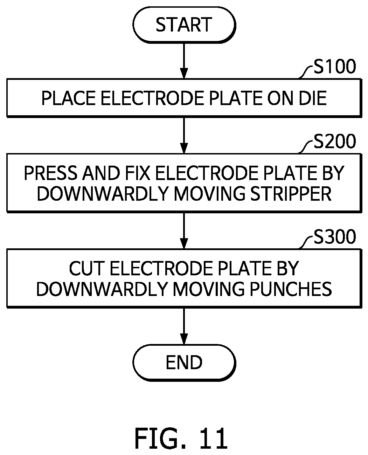

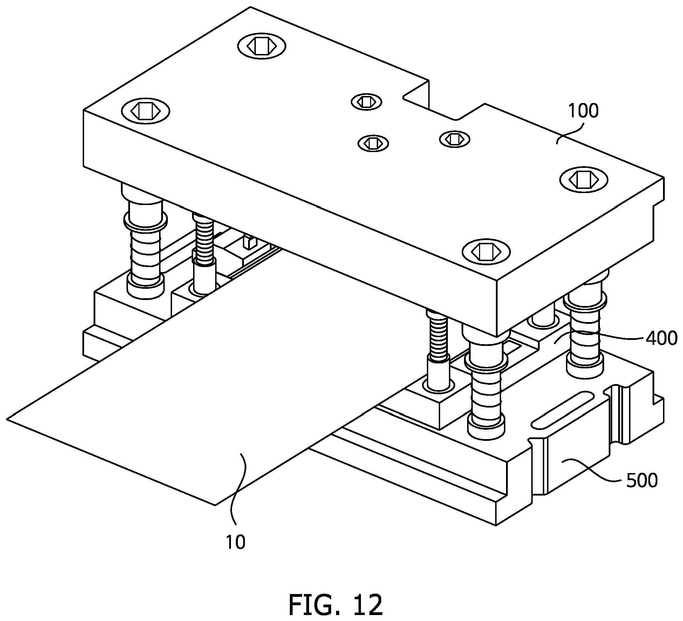

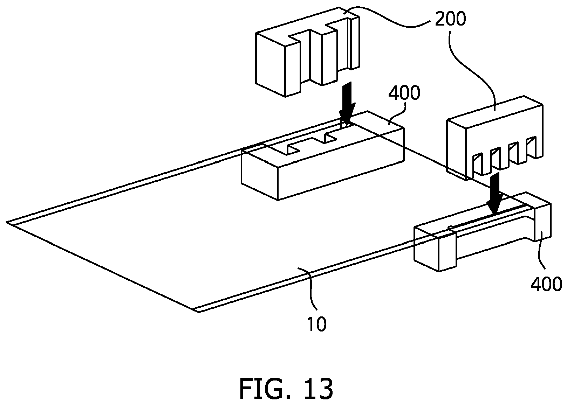

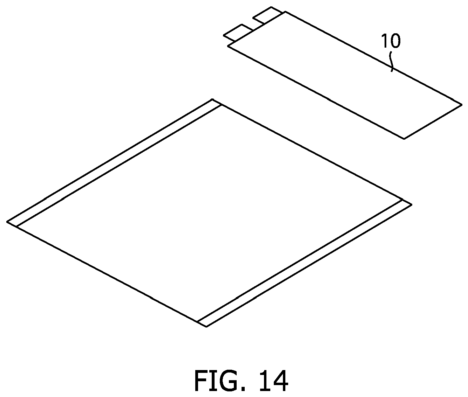

FIG. 11 is a flowchart showing a method of notching electrode plates for secondary batteries according to embodiments of the present disclosure. FIG. 12 is a perspective view showing an arrangement of an electrode plate on an apparatus for notching electrode plates for secondary batteries according to embodiments of the present disclosure. FIG. 13 shows punches of the apparatus for notching electrode plates for secondary batteries according to embodiments of the present disclosure, moving toward the electrode plate. FIG. 14 shows a state in which the electrode plate cut in FIG. 13 is slit according to embodiments of the present disclosure.

In an embodiment, a method of notching electrode plates for secondary batteries may be performed using the notching apparatus of FIG. 1.

Referring to FIGS. 11-14, the method of notching electrode plates for secondary batteries may begin with operation S100 of placing an electrode plate on a die. In an embodiment, the operation S100 of placing an electrode plate on a die may include preparing a first base 100 and a second base 500 and placing an electrode plate 10 on a die 400 coupled to the second base 500.

After the operation S100 of placing an electrode plate on a die, operation S200 of pressing and fixing the electrode plate by the stripper may be performed. In the operation S200 of pressing and fixing the electrode plate by the stripper, the stripper may press and fix the electrode plate placed on the die by moving downward. In an embodiment, in operation S200 of pressing and fixing the electrode plate by the stripper, the stripper spaced apart from the die may move toward the electrode plate and fix the top surface of the electrode plate.

After the operation S200 of pressing and fixing the electrode plate by the stripper, operation S300 of cutting the electrode plate may be performed. The operation S300 of cutting the electrode plate may be an operation of downwardly moving punches spaced apart from the top surface of the die to cut the electrode plate. In an embodiment, in the operation S300 of cutting the electrode plate, the punches spaced apart from the stripper may be moved downward to cut the electrode plate.

In the operation S300 of cutting the electrode plate, each of separation distances between the punches and the stripper may be 0.25 mm to 1 mm. In an embodiment, the separation distance between the punch and the stripper may be 0.5 mm. In the operation S300 of cutting the electrode plate, the electrode plate 10 may be cut as the punches 200 enter the punch receptacles provided in the die 400. At this time, each of the distances between the punches and the stripper may be maintained at a level of 0.25 mm to 1 mm, and the active material may be prevented from being stuck between the punches and the stripper during the process of cutting the electrode plate.

Advantageously, the method of notching electrode plates for secondary batteries according to embodiments of the present disclosure may prevent problems of poor die assembly and poor operability of the notching apparatus. Embodiments of the present disclosure prevent the active material from accumulating on the die between the punches and the stripper due to repeat notching and prevent the notching die from seizure and wear and tear.

After the operation S300 of cutting the electrode plate, electrode tabs are formed on the electrode plate 10 having a film shape by a notching process as shown in FIG. 14, and the electrode plate 10 may be cut to a size corresponding to the size of a secondary battery and formed into electrodes for an individual battery by a slitting process.

The flowchart of FIG. 11 and the above description are merely illustrative of the present disclosure, but the scope of the present disclosure is not limited to the flowchart of FIG. 11 and the above description. In an embodiment, one or more operations of the flowchart and the above description may be added/changed/deleted, the order of one or more operations may be changed, and one or more operations may be performed substantially at the same time.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure.

### <Description of Notable Reference Symbols>

100: first base
110: punch plate
200: punch
300: stripper
310: curved portion
400: die
500: second base

## Claims

1. An apparatus, comprising:
a first base (100);
a punch plate (110) coupled to a surface of the first base (100);
a first punch (200) and a second punch (200) spaced apart from each other, coupled to the punch plate (110), and configured to cut an electrode plate (10);
a stripper (300) positioned between the first punch (200) and the second punch (200) and coupled to the punch plate (110);
a second base (500); and
a die (400) coupled to the second base (500) and configured to have the electrode plate (10) placed on a surface of the die (400),
wherein a first distance between the first punch (200) and the stripper (300) ranges from 0.25 mm to 1 mm and a second distance between the second punch (200) and the stripper (300) ranges from 0.25 mm to 1 mm.

2. The apparatus as claimed in claim 1, wherein the first distance is 0.5 mm and the second distance is 0.5 mm.

3. The apparatus according to any of claims 1 or 2, wherein a curved portion (310) is provided on at least one edge of the stripper (300) adjacent to the first punch (200) or the second punch (200).

4. The apparatus as claimed in claim 3, wherein a third distance (L1) of the curved portion (310) in a first direction (D1) is different from a fourth distance (L2) of the curved portion (310) in a second direction (D2) perpendicular to the first direction (D1).

5. The apparatus as claimed in claim 4, wherein the first direction (D1) is perpendicular to a longitudinal direction of the stripper (300), and wherein the third distance (L1) is greater than the fourth distance (L2).

6. The apparatus according to any of claims 4 or 5, wherein the third distance (L1) is equal to or greater than 0.7 mm.

7. The apparatus according to any of claims 4 to 6, wherein the third distance (L1) is 0.75 mm, and wherein the fourth distance (L2) is 0.25 mm.

8. The apparatus according to any of the previous claims, wherein the stripper (300) is spaced apart from the die (400) and faces the die (400), and is configured to move toward the electrode plate (10) to press a top surface of the electrode plate (10).

9. The apparatus according to any of the previous claims, wherein the apparatus is configured to notch electrode plates (10) having a thickness ranging from 0.18 mm to 0.22 mm.

10. The apparatus according to any of the previous claims, wherein the first punch (200) and the second punch (200) are configured to move upward and downward along with the first base (100).

11. A method for notching electrode plates (10) for secondary batteries, wherein preferably the method is performed by an apparatus configured according to any of the previous claims, comprising:
placing an electrode plate (10) on a die (400);
pressing the electrode plate (10) via a downward motion of a stripper (300); and
cutting the electrode plate (10) via a downward motion of a first punch (200) and a second punch (200) spaced apart from the stripper (300),
wherein a first distance between the first punch (200) and the stripper (300) ranges from 0.25 mm to 1 mm and a second distance between the second punch (200) and the stripper (300) ranges from 0.25 mm to 1 mm.

12. The method as claimed in claim 11, wherein a curved portion (310) is provided on at least one edge of the stripper (300) adjacent to the first punch (200) or the second punch (200).

13. The method as claimed in claim 12, wherein a third distance (L1) of the curved portion (310) in a first direction (D1) is different from a fourth distance (L2) of the curved portion (310) in a second direction (D2) perpendicular to the first direction (D2).

14. The method as claimed in any of claims 11 to 13, the stripper (300) is spaced apart from the die (400) and faces the die (400), and is configured to move toward the electrode plate (10) to press a top surface of the electrode plate (10).

15. The method as claimed in any of claims 11 to 14, wherein the first punch (200) and the second punch (200) are configured to move upward and downward along with the first base (100).
